# EUROPEAN PATENT SPECIFICATION

(11) **EP 3 693 647 B1**
(45) Date of publication and mention of the grant of the patent: **04.05.2022**
(21) Application number: 19020535.1
(22) Date of filing: 23.09.2019
(51) Int. Cl.: F16L 55/179, E02D 29/12, E03F 5/02, F16L 55/18

(54) **RENOVATION DRAIN SYSTEM FOR REPAIRING CONCRETE DRAIN**
SANIERUNGSABFLUSSSYSTEM ZUR REPARATUR EINES BETONKANALS
SYSTÈME DE DRAIN DE RÉNOVATION POUR RÉPARATION DE DRAIN EN BÉTON

(30) Priority: 24.09.2018 FI 20187137
(43) Date of publication of application: 12.08.2020
(73) Proprietor: Hämäläinen, Sami, 00930 Helsinki (FI)
(72) Inventor: Hämäläinen, Sami, 00930 Helsinki (FI)
(74) Representative: Sach, Greg Robert

(56) References cited:
- WO-A1-91/15634
- WO-A2-2008/039767
- US-A- 3 403 703
- US-A- 5 752 787
- US-A1- 2015 345 686

## Description

### Renovation drain system for repairing concrete drain

Area of technology: an invention relates to repairing storm drains, yard drains, inspection chambers, or other drains made of concrete; the invention further relates to liner members and renovation drains to be used in pipeline renovations.

### Background of the technology

A storm drain (or storm sewer) is used for collecting rain water or storm water. The storm drain is situated such that rain water or storm water flows into the storm drain. The water rained on a roof can be led to gutters and then via the tubing coupled to the gutters into a yard drain. From the yard drain the water is led, for example, into a municipal storm drainage system. A yard drain receives either storm water or sewer water but especially on old residential areas drain water and sewer water are led in the same piping system.

The drain to be repaired is expected to include mostly concrete and thus it is termed a "concrete drain". The concrete drain has on its bottom one or more chutes made of concrete such that a chute is coupled to an inlet pipe of a concrete drain or the outlet pipe of the concrete drain. The concrete drain can be repaired by cleaning its inner surface and covering the inner surface again with concrete. Re-covering of the inner surface, however, includes a lot of manual work, which makes the method expensive.

Epoxy spaying is another known renovation method but the epoxy spraying suits poorly for repairing a concrete drain because epoxy does not properly stick to wet concrete, and drying of the concrete drain takes a lot of time.

A renovation drain is a third known renovation method for a concrete drain. The renovation drain is made of plastic and its diameter is less than the diameter of the concrete drain to enable assembling it inside the concrete drain. First, holes are made on the sides of the renovation drain for fitting parts, and the pipes incoming into the concrete drain and the pipes outgoing from the concrete drain are coupled through the fitting parts to the renovation drain. Then the renovation drain is attached to the concrete drain with concreting or with a portion of gravel.

Lining is a fourth known method for a concrete drain. Liner to be used includes porous material, such as felt, and restorative material as PVC (polyvinyl chloride). The liner is impregnated with an impregnating compound including epoxy or some other type of resin. After hardening of the compound the liner forms a durable lining inside the concrete drain.

A liner member is a liner comprising multiple branches. For example, the liner member intended for a Y branch of a piping comprises three branches. When a packer and a liner member are moved, for example, by a ramrod at the Y branch, one of the liner branches is forced out of the packer and simultaneously compressed air pressures each liner branch against the inner walls of the Y branch.

A preliner is a tool to be used in lining. One purpose of the preliner is to operate as a mold against which a liner gets squeezed. This kind of mold is needed, for example, when corrosion has created holes to a cast iron pipe to be repaired.

A problem of the prior art relates to a situation in which the pipes connecting concrete drains are to be repaired using pipe lining and at least one of the drains is to be repaired placing a renovation drain inside of it, or alternatively, assembling a cleaning cap. An ordinary liner member is not suitable in this situation.

WO9115634 discloses a method of lining a concrete drain. US2015345686 discloses the lining of a man-hole in a sewer system including a pile line extending through and from the bottom of the man-hole.

JP2002295785 can be considered to represent close prior art because it describes a liner member including two different manufacturing materials. The first material is rubber and the second material is a liner to be impregnated with compound such that the liner is adhered to a branch made of rubber. In more detail, the branch includes a collar to which the liner is adhered. JP2007321840 describes a liner member made of rubber only. JP2002301766 describes a liner member that includes two different types of plastic. US2011203719, US2009194184, and WO2008039767 describe liner members made of liner only.

Another problem of the prior art is related to manual work stages and the work hours needed for assembling liner members.

The third problem of the prior art is related to a fact that concrete drains differ from each other, due to which various liner members are needed for repairing them. A liner member can be manufactured, for example, by molding with plastic but it is very uneconomical to make a cast for each different liner member.

### Summary of the invention

An aspect of the innovation is to solve the above-mentioned problems in repairing of concrete drains.

Another aspect of the innovation is to use pipe lining for repairing at least some of the pipes coupled to a concrete drain at which time a liner included in a liner member is easily and reliably adhered to the pipes.

Another aspect of the innovation is to use such liner member that comprises a bushing, and the bushing retaining its shape couples at least two pipes of the concrete drain to a renovation drain (made of plastic). Alternatively, the bushing of the liner member couples the pipes to a cleaning cap.

A liner member is needed for repairing a concrete drain in accordance with the invention. The liner member comprises a liner whose first branch reaches an inlet pipe of the concrete drain and whose second branch reaches an outlet pipe of the concrete drain. The liner member has a liner hole between the first branch and the second branch.

In addition, a bushing is needed for repairing the concrete drain in accordance with the invention. The bushing remains its shape and adheres to the liner member. The bushing operates as a third branch of the liner member and forms, together with a liner hole, an inlet into the liner member. A collar is adhered to the liner around the liner hole.

The invention concerns a renovation drain system for repairing a concrete drain , the renovation drain system of the invention comprising a renovation drain. The renovation drain system further comprises:
a liner member including liner to be prepared with impregnating compound, a first branch, and a second branch such that the first branch is intended to extend into an inlet pipe of the concrete drain, the second branch is intended to extend into an outlet pipe of the concrete drain, and the liner has a liner hole between the first branch and the second branch,
a bushing retaining its shape, and the bushing is intended to be attached to the renovation drain inside the concrete drain, and
a collar for attaching the bushing to the liner such that the bushing operates as a third branch in the liner member and the liner hole is located at the bushing and forms together with the bushing an inlet from the renovation drain into the liner member, and the collar adheres to the liner around the liner hole.

### Brief description of the drawings

For a more complete understanding of examples and embodiments of the present invention, reference is now made to accompanying drawings in which:
FIGURE 1 shows a liner member, a bushing and a collar being the same object,
FIGURE 1B shows a liner member in which the collar is made if a liner,
FIGURE 1C shows a liner member in which the collar is a separated part,
FIGURE 2A shows a liner member assembled in a concrete drain,
FIGURE 2B shows two sealant options for a liner member and a concrete drain,
FIGURE 2C shows assembling of the bottom of a renovation drain,
FIGURE 2D shows a telescope pipe for a renovation drain,
FIGURE 3 shows two cleaning cap options for a liner member,
FIGURE 4A shows use of preliner in a concrete drain,
FIGURE 4B shows a liner branch and a bushing which project from a preliner,
FIGURE 5 shows a liner member comprising lapels,
FIGURE 6A shows an assembly tool for the liner member comprising lapels,
FIGURE 6B shows assembling of a liner member comprising lapels,
FIGURE 7A shows another assembly tool for the liner member,
FIGURE 7B shows use of half-pipes in assembling of a line member,
FIGURE 8 shows a renovation drain system for repairing a concrete drain,
FIGURE 9 shows an example of building piping connections and a renovation drain system.

### Detailed description of the invention

It is appreciated that the following embodiments are exemplary. Although the specification may refer to "one" embodiment, the reference is not necessarily made to the same embodiment(s), or the feature in question may apply to multiple embodiments.

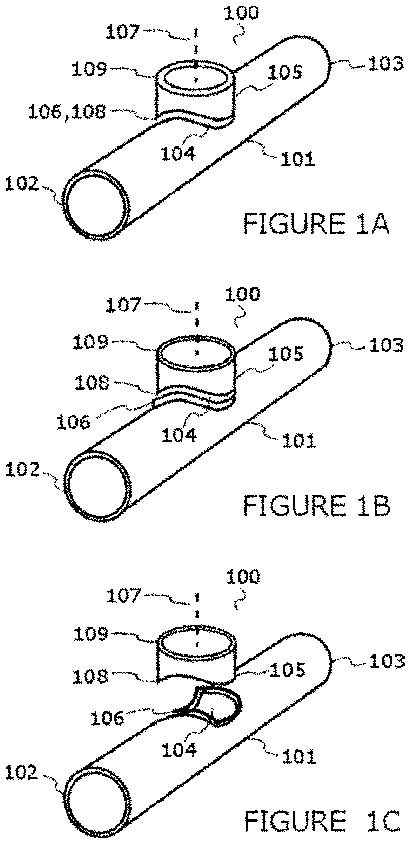

**FIGURE 1A** shows a liner member 100 as parts. Liner member 100 is intended for repairing a concrete drain and it includes a liner 101 to be impregnated with compound. The compound is, for example, epoxy or resin. In one embodiment a first branch 102 of liner 101 is intended to be placed onto a chute on the bottom of the concrete drain to be repaired and a second branch 103 of liner 101 is intended to be placed onto another chute on the bottom of the concrete drain. A liner hole 104 is formed between first branch 102 and second branch 103.

Liner member 100 further comprises a bushing 105 and a collar 106. Bushing 105 is made of plastic such as PVC (polyvinyl chloride) or PE (polyethylene), or metal like aluminum or stainless steel. Bushing 105 adheres to liner 101 such that bushing 105 operates as a third branch of liner member 100. Liner hole 104 is located right at bushing 105 where it forms together with bushing 105 an inlet 107. Collar 106 adheres to liner 101 around liner hole 104 (in this example collar 106 adheres directly to liner 101).

In the first embodiment of liner member 100, collar 106 forms together with bushing 105 the same object, for example, an object made of plastic. In one embodiment, this object is created in a manufacturing stage, i.e. before assembling liner member 100. The wall of bushing 105 is quite thick and an intersection surface at an end 108 of the wall operates as collar 106 against which liner 101 is attachable, for example, with clue.

In figure 1A the cross-section of end 108 is as wide as the cross-section surface of an upper end 109 in bushing 105. The width of the cross-section is the same as the thickness of bushing 105. In another embodiment, end 108 operating as collar 106 comprises an extension that is broader than the upper end 109 of bushing 105. When end 108 operating as collar 106 is, for example, 1 cm wide, it is possible to spread quite much clue on it to attach bushing 105 to liner 101.

**FIGURE IB** shows another embodiment of liner member 100. Liner member 100 comprises bushing 105 and collar 106 made of liner 101. Bushing 105 is made of e.g. PE plastic, and liner 101 and collar 106 are made of e.g. felt.

Felt is adjustable material and so liner 101 and collar 106 are shaped from the same piece of felt. In another embodiment, liner 101 and collar are weaved. A string to be used in the weaving must be absorptive such that the compound to be used as a hardener of liner 101 absorbs into the string. Collar 106 is attached, for example, with clue on the outer surface of bushing 105. Alternatively, collar 106 is attached on the inner surface of bushing 105 after which liner member 100 is ready to be assembled. In one embodiment, liner member 100 includes liner 101 whose one branch extends into bushing 105 and may be longer than bushing 105.

**FIGURE 1C** shows a third embodiment of liner member 100 whose parts are bushing 105, liner 101, and collar 106. All the parts are attachable to each other with clue or silicone. Bushing 105 is e.g. aluminum and collar 106 is made of PVC plastic, and liner 101 comprises absorptive material covered with PVC or polyurethane. Collar 106 may include a groove into which end 108 of bushing 105 is pushed. Alternatively, collar 106 has such measures that it is attachable to the inner or outer surface of end 108 of bushing 105. Collar 106 forms either alone or together with end 108 of bushing 105 a wide enough surface for attaching liner 101 to bushing 105.

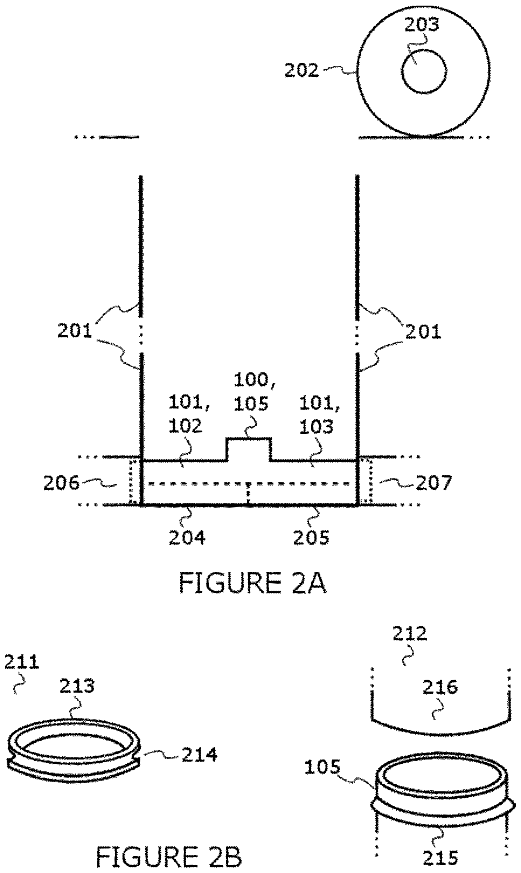

**FIGURE 2A** shows a cross-section of liner member 100 and a concrete drain 201 such that concrete drain 201 is marked with a thick line and its middle part is replaced with three dots. In this example concrete drain 201 operates as an inspection drain in a sewer system. A renovation drain 202 intended for repairing concrete drain 201 is not yet assembled. The flat bottom and a drain hole 203 are visible. Drain hole 203 may already exists at the bottom of renovation drain 202. Alternatively, a technician drills the drain hole to a spot that is suitable for assembling.

Liner member 100 is assembled into concrete drain 201 such that first branch 102 included in liner 101 rests on the bottom of a first chute 204 and second branch 103 included in liner 101 rests on the bottom of a second chute 205. First branch 102 extends somewhat into an inlet pipe 206 and second branch extends somewhat into an outlet pipe 207. Water is allowed to flow from inlet pipe 206 via liner member 100 to outlet pipe 207 when liner 101 in liner member 100 is hardened. Concrete drain 201 may be coupled to more than one inlet pipe 206 or more than one outlet pipe 207.

**FIGURE 2B** shows in a first view 211 a first sealant option for liner member 100 and concrete drain 201 and a second sealant option in a second view 212.

In first view 211, a sealant 213 is a rubber ring whose outer surface includes a groove 214 extending around the rubber ring. The diameter of sealant 213 is the same as the diameter of drain hole 203 in renovation drain 202 shown in figure 2A. Sealant 213 is intended to be assembled into renovation drain 202 such that groove 214 is located against the edge of drain hole 203. When renovation drain is put down on bushing 105, sealant 213 makes the joint between renovation drain 202 and bushing 105 watertight.

In second view 212, a sealant 215 is a rubber O ring that is stretched and adheres to the groove formed onto bushing 105. The bottom of renovation drain 202 comprises a bushing 216 whose diameter is that is slightly larger than the diameter of bushing 105 of liner member 100. Bushing 105 in liner member 100 is intended to be assembled into bushing 216 that is included in the bottom of renovation drain 202. The sealant 215 makes the joint between bushing 105 and bushing 216 watertight.

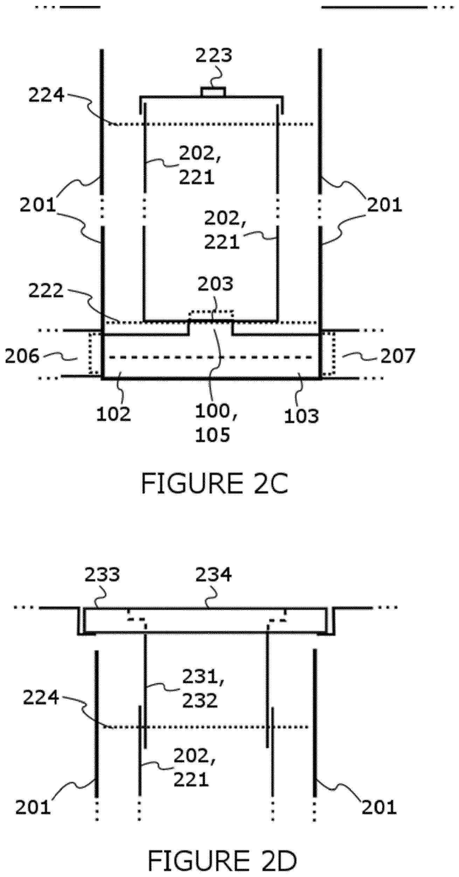

**FIGURE 2C** shows assembling renovation drain 202, wherein concrete drain 201 and renovation drain 202 are viewed as a cross-section. Concrete drain 201 comprises a pipe-type of bottom part 221 with drain hole 203. First, mineral aggregate (such as gravel or sand) is brought into concrete drain 201 such that the mineral aggregate fills concrete drain 201 from its bottom up to the first dot line 222. Due to the filling, first branch 102 and second branch 103 are left under the mineral aggregate and only bushing 105 is visible.

Then bottom part 221 is put down onto the mineral aggregate such that bushing 105 is penetrated into drain hole 203. The mouth of renovation drain 202 is covered by a lid 223 with handle, and then more mineral aggregate is added into concrete drain 201. Mineral aggregate has gradually filled the space between renovation drain 202 and concrete drain 201 until it has reached the second dot line 224. After that lid 223 with handle is removed and the assembly work will continue with assembling a telescope pipe.

**FIGURE 2D** shows a cross-section of a telescope pipe 231 coupled with renovation drain 202. The mineral aggregate extends to the second dot line 224 and supports bottom part 221 of renovation drain 202, and the end of telescope pipe 231 is pushed into bottom part 221.

Telescope pipes are available with different lengths, thus renovation drain 202 and the telescope pipe included it can be placed in a number of concrete drains with different lengths. Liner member 100 is similar as in figure 2C and it is omitted from figure 2D.

In addition to a pipe-type of part 232, telescope pipe 231 includes a cover slab 233 that is permanently attached to pipe-type of part 232. Cover slab 233 comprises a manhole cover 234 which is detachable providing an access into renovation drain 202. Pipe-type of part 232 is in this example made of plastic and cover slab 233 and manhole cover 234 are made of cast iron. Because telescope pipe can move vertically in relation to bottom part 221 of renovation drain 202, possible altitude variation of the ground surface does not break bottom part 221.

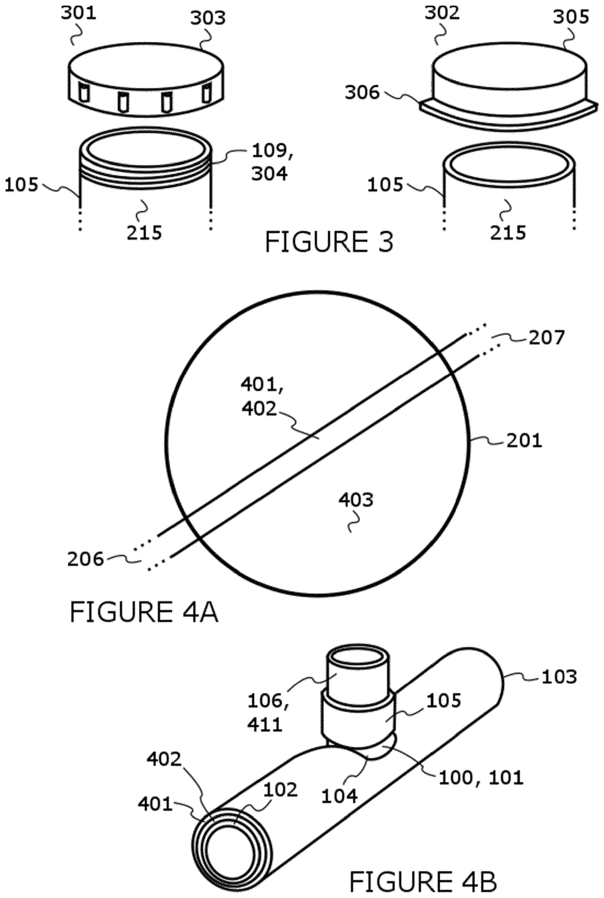

**FIGURE 3** shows a first view 301 and a second view 302 about optional cleaning caps for liner member 100. In one embodiment, liner member 100 comprises a cleaning cap that is detachably attachable to bushing 105. Thus, instead of the renovation drain, liner member 100 can be attached to a cleaning cap. A concrete drain can operate, for example, as an instruction drain in a sewer system and the cleaning cap applies to such concrete drain. After removing the cleaning cap, a concrete drain can be inspected and, when needed, the pipes coupled to the concrete drain can be cleaned.

In first view 301, a cleaning cap 303 is made of plastic and it operates as a screw top. In more detail, screw threads formed onto cleaning cap 303 fit onto screw threads 304 formed onto the upper end 109 of bushing 105.

In second view 302, cleaning cap 305 is made of rubber and it can be pressed onto bushing 105 such that cleaning cap covers the upper end 109 of bushing 105. Cleaning cap 305 has a flange 306 to help releasing of the cleaning cap.

**FIGURE 4A** shows from a bird's perspective a preliner 401 and a liner 402 that is slipped from another concrete drain via inlet pipe 206 into concrete drain 201 and via outlet pipe 207 to the next concrete drain. Because liner 402 is placed inside preliner 401, it does not enlarge too much into the open space in concrete drain 201 when liner 402 is pressurized by some liner slipping tool. Due to preliner 401, liner 402 hardens to the shape of a pipe and has a predetermined size.

Mineral aggregate 403 is set on the bottom of concrete drain 201 such that mineral aggregate 403 supports preliner 401 and liner 402 during the slipping stage and the hardening stage of liner 402. By using preliner 401 and mineral aggregate 403 (between preliner 401 and the bottom of concrete drain 201) the liner member in accordance with the invention can be assembled to some other place than onto the chutes at the bottom of concrete drain 201.

**FIGURE 4B** shows liner 101 and bushing 105 that extends out of liner 101. As in the previous examples, liner 101 includes first branch 102, second branch 103 and a third branch 411, wherein third branch 411 operates as collar 106. In this embodiment, preliner 401 and liner 402 are used as support part. The situation shown in figure 4B has been preceded such assembly stage in which liner hole 104 has been made to liner 402 and preliner 401 so that third branch 411 of liner 101 is got out of liner 402. Liner hole 104 can be made by a known remote-controllable tool and liner 101 can be brought by a packer via inlet pipe 206 to liner hole 104. Alternatively, these tasks can be performed inside the concreted drain into which liner member 100 is wanted to be assembled.

In the next stage, a technician working in the concrete drain has placed bushing 105 around third branch 411. The compound attaches third branch 411 onto inner surface of bushing 105 and liner member 100 including bushing 105 is in this manner created. Liner member 100 is a product which is possibly manufactured according to distinctive measures and which is ready for assembling after impregnating of compound. Figure 4B shows a first example of liner member 100 to be created on the installation place.

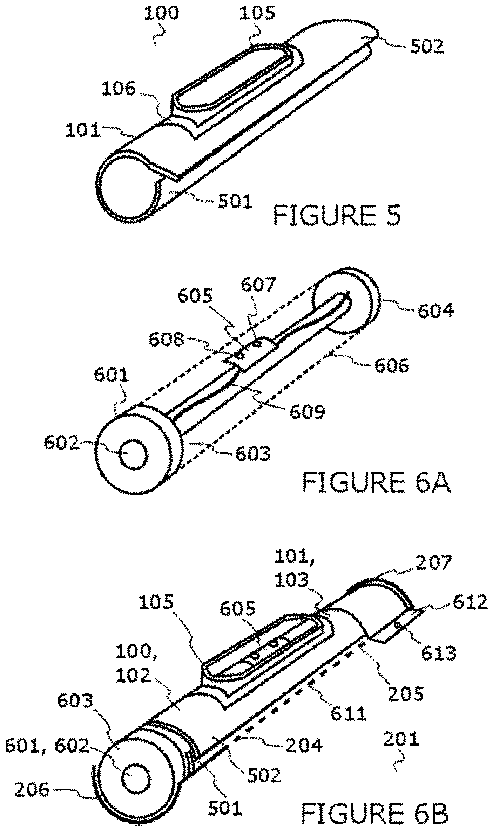

**FIGURE 5** shows liner member 100 which has lapels. It can assembled by a liner member tool having a by-pass flow pipe. Liner 101 comprises a first lapel 501 and a second label 502 such that when placing first lapel 501 and second label 502 partly one on the other, liner 101 forms a contiguous pipe. The contiguous pipe is hardened in the assembly stage with compound. Figure 5 shows an example of bushing 105 whose cross-section is not a circle but an oval. The large size of bushing 105 enables that an assembly tool is easily removable inside of liner member 100 via bushing 105 and the large size of bushing 105m further enhances maintainability of the sewer. Bushing 105 and collar 106 are included in the same object and collar 106 includes a plate-type of part that arches likewise a pipe.

FIGURE 6A shows an assembly tool 601 for liner member 100 shown in figure 5. Assembly tool 601 comprises a by-pass flow pipe 602 made of a hose or a flexible pipe, and sealant rings to be pressurized such that a first sealant ring 603 is attached to the first end of by-pass flow pipe 602 and a second sealant ring 604 is attached to the opposite end of by-pass flow pipe 602. Instead of pass flowing, the sewer water or rainwater coming into the concrete drain to be repaired can be led via the ground surface to another concrete drain. This kind of arrangement, however, may be problematic, if there is vehicle traffic on the ground.

In addition, assembly tool 601 comprises a coupler plate 605 and a bladder 606 (marked with dashed line). Bladder 606 is further adhered to first sealant ring 603 and second sealant ring 604. Coupler plate 605 is made of e.g. plastic, and it is smaller than bushing 105 included in liner member 100 so that coupler plate 605 and assembly tool 601 can be taken out of bushing 105. Two couplers are immersed into coupler plate 605 and one them i.e. a bladder coupler 607 is intended for pressurizing bladder 606. A sealant ring coupler 608 is intended for pressurizing first sealant ring 603 and second sealant ring 604. Sealant ring coupler 608 comprises a Y branch from which hose 609 extends to first sealant ring 603 and another hose extends to second sealant ring 604.

**FIGURE 6B** shows assembling liner member 100 into concrete drain 201. Liner member 100 comprises lapels and first branch 102 of liner 101 rests on the bottom of first chute 204 in concrete drain 201, and second branch 103 rests on the bottom of second chute 205 in concrete drain 201. The edges of first chute 204 and second chute 205 are marked with a dashed line 611. Assembly of liner member 100 comprises the following stages. First lapel 501 of liner 101 is longer than the other one and it is wrapped around assembly tool 601. Second lapel 502 is placed on first lapel 501. The ends of assembly tool 601 and the ends of liner member 100 are pushed into the pipes of concrete drain. In more detail, first sealant 603 is pushed into inlet pipe 206 and simultaneously the end of first branch of liner member 100 is placed into inlet pipe 206. Second sealant ring (not shown) of assembly tool 601 is pushed into outlet pipe 207 and thus also the end of second branch 103 is pushed into outlet pipe 207. Second branch 103 is attached with a half-pipe 612 to second chute 205.

Finally, the edges of half-pipe 612 have been attached (e.g. with a nail gun) to the bottom of concrete drain 201. In this example a nail 613 has penetrated the edge of half-pipe 612 and has sunk into the concrete. First branch 102 is uncovered in figure 6A. When it is covered with a half-pipe, liner member 100 can be pressurized via bushing 105 by coupling fluid hoses to the couplers of coupler plate 605. For example, water or air are usable as pressurizing fluid.

In one embodiment, liner member 100 comprises half-pipe 612 intended for attaching liner member 100. In other words, when liner 101 handled with compound has been hardened, half-pipe 612 and liner 101 form the same object. Use of half-pipes requires that liner member 100 is assembled on the bottom of concrete drain (on a chute or chutes).

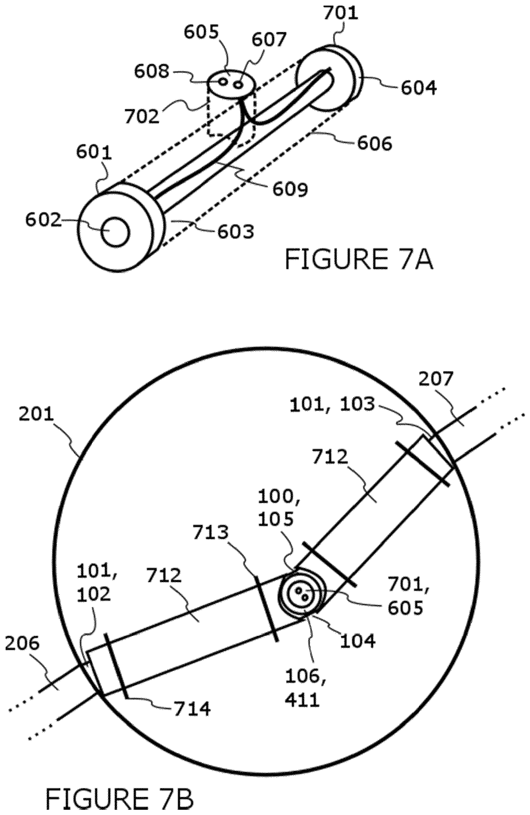

**FIGURE 7A** shows an assembly tool 701 for a liner 101 shown in figure 4B. The components of assembly tool 701 are operationally similar as the components of assembly tool 601 presented in the above: by-pass flow pipe 602, first sealant ring 603, second sealant ring 604, coupler plate 605, bladder 606, bladder coupler 607, sealant ring coupler 608, and a hose 609 (for first sealant ring). Because liner 101 has a third branch (not shown), bladder 606 of assembly tool 701 comprises a projection 702 for pressurizing the third branch. Coupler plate 605 is placed onto the end of projection 702.

**FIGURE 7B** shows from a bird's perspective another example of liner member 100 to be formed on an installation place. As shown in figure 4D, liner member 100 comprises first branch 102, second branch 103, and third branch 411. As shown in figure 5, liner 101 has a first lapel that is longer than a second lapel. The first lapel is wrapped around assembly tool 701. In this manner, assembly tool 701 stays for pressurizing liner 101 inside liner 101.

Then liner 101 and assembly tool 701 are covered with a first half-pipe 711 and a second half-pipe 712. Half-pipes are brought to the installation place to be shaped thereat. First half-pipe 711 and second half-pipe 712 are cut at the installation place with an electric foxtail saw. Liner hole 104 for revealing third branch 411 and collar 106 is created in the following manner: a piece having a shape of semicircle is cut from the end of half-pipe 711, and the end of second half-pipe 712 is beveled and a piece having a shape of semicircle is cut from it.

Figure 7B shows a situation in which collar 106 (i.e. third branch of liner 101) extends out from the bottom of concrete drain 201 and a technician has placed bushing 105 around of it. First half-pipe and second half-pipe cover almost completely first branch 102 and second branch 103 of liner 101. Connector plate 605 attached to projection 702 is the only visible part of assembly tool 701. The both half-pipes are attached to the bottom of concrete drain 201, for example, with pieces of punched tape and nails. The tape is made of steel and it is generally used in construction work. First half-pipe 711 is attached to the concrete drain with punched tape 713 such that a piece of punched tape 713 passes over first half-pipe and is attached from its both ends to the bottom of concrete drain 201 with nails of a nail gun. A corresponding piece 714 of punched tape 713 is located at the opposite end of half-pipe 711. It is possible to make a curve or an angle to liner member 100 by using half-pipes.

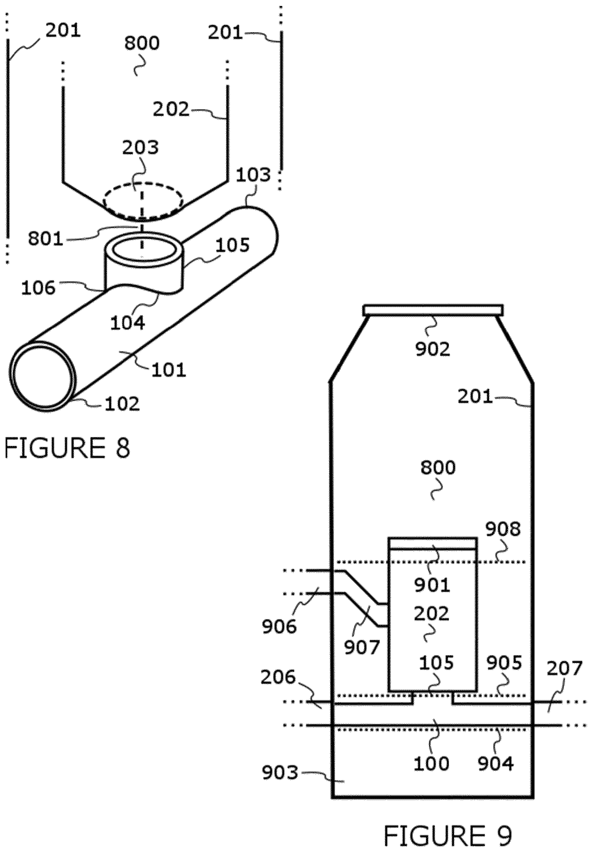

**FIGURE 8** shows a renovation drain system 800 for repairing a concrete drain. Renovation drain system 800 comprises renovation drain 202 that is made of e.g. plastic. In addition to renovation drain 202, renovation drain system 800 comprises liner member 100 made of felt or some other liner material. Liner member 100 comprises liner 101 to be impregnated with compound, first branch 102, and second branch 103. First branch 102 is intended to extend into an inlet pipe of concrete drain 201 and second branch 103 is intended to extend into an outlet pipe of concrete drain 201 (inlet and outlet pipes are not shown). Liner hole 104 formed to liner 101 is not visible but it is located between first branch 102 and second branch 103. Liner member 100 comprises collar 106 and bushing 105 which retains its shape and can be coupled to renovation drain 202. Bushing 105 operates as the third branch in the liner member 100 and liner hole 104 is located at bushing 105 and forms (with bushing 105) inlet 107 from renovation drain 202 into the liner member 100. Collar adheres to liner 101 around liner hole 104 and is able to attach bushing 105 reliably to liner 101 (different attaching method are described in the above)..

In figure 8 renovation drain 202 intended for repairing concrete drain 201 is funnel shaped and the narrowest part of it includes drain hole 203 into which bushing 105 can be pushed. Concrete drain 201 is mainly made of concrete but its shape and purpose may vary. In one embodiment, renovation drain system 800 comprises a telescope pipe (shown in figure 2D).

**FIGURE 9** shows an example of renovation drain system 800 as a cross-section. Concrete drain operating as a yard drain is repaired with renovation drain system 800 by using renovation drain 202 with a lid 901 as such drain that fits into concrete drain 201. A technician can enter via cover part 902 into concrete drain 201 to perform inspection and reparation tasks. Concrete drain 201 comprises a sediment chamber 903 and the repairing starts by filling sediment chamber 903 with mineral aggregate such that dotted line 904 shows the upper edge of the mineral aggregate. After that liner member 100 is assembled such that preliner and the liner member shown in figures 4A and 4B is used as liner member 100. Dotted line 905 shows the new upper edge of mineral aggregate. Purpose of this filling is to support and position liner member 100 such that liner member 100 can lead water from inlet pipe 206 to outlet pipe 207. When liner member 100 is hardened the ends of preliner are removed from it, as described in figure 4B. The assembly continues by putting renovation drain 202 down on bushing 105. Renovation drain 202 has a hole for bushing 105 and another hole for a piping connection 906. Next a pipe part 907 (penstock pier), which couples piping connection 906 to renovation drain 202, is attached the hole formed to the side of renovation drain 202 Then a building having piping connection 906 is coupled to the sewer system. Lastly, renovation drain 202 is supported by adding mineral aggregate between renovation drain 202 and concrete drain 201 such that a dot line 908 shows the upper surface of mineral aggregate added therein.

Relating to the above-shown figures and embodiments it is remarked that pressurizing of liner member 100 is performed with fluid (such as air or water) and liner 101 included in liner member 100 hardens in due time but, depending on the composition of compound, the hardening of liner 101 can be accelerated with heat, ultraviolet light, or blue light.

While the invention has been described in connection with exemplary embodiments and implementations the invention further covers various modifications and equivalent arrangements within the following claims.

## Claims

1. A renovation drain system (800) for repairing a concrete drain (201), comprising
a renovation drain (202),
**characterized in that** the renovation drain system (800) further comprises a liner member (100) including liner (101) to be prepared with impregnating compound, a first branch (102) and a second branch (103) such that the first branch is intended to extend into an inlet pipe of the concrete drain (201), the second branch is intended to extend into an outlet pipe of the concrete drain, and the liner (101) has a liner hole (104) between the first branch (102) and the second branch (103),
a bushing (105) retaining its shape, and the bushing is intended to be attached to the renovation drain (202) inside the concrete drain (201), and
a collar (106) for attaching the bushing to the liner (101) such that the bushing operates as a third branch in the liner member (100) and the liner hole (104) is located at the bushing (105) and forms together with the bushing an inlet (107) from the renovation drain (202) into the liner member (100), and the collar (106) adheres to the liner (101) around the liner hole (104).

2. The renovation drain system as claimed in claim 1, **characterized in that** the collar (106) forms a same object with the bushing (105).

3. The renovation drain system as claimed in claim 1, **characterized in that** after adhesion the collar (106) is formed of the liner (101).

4. The renovation drain system as claimed in claim 1, **characterized in that** the collar (106) is in a manufacturing stage of the liner member (100) an object separated from the liner (101) and the bushing (105).

5. The renovation drain system as claimed in claim 1, **characterized in that** the renovation drain system comprises a telescope pipe (231).

6. The renovation drain system as claimed in claim 1, **characterized in that** the liner member (100) comprises a cleaning cap (303, 305).

7. The renovation drain system as claimed in claim 1, **characterized in that** the renovation drain system comprises a preliner (401) and a second liner (402), and the preliner and the second liner are used as support parts to form the liner member (100).

8. The renovation drain system as claimed in claim 1, **characterized in that** the liner (101) comprises a first lapel (501) and a second lapel (502) such that the liner (101) forms a branch by placing the first lapel and the second lapel partly one upon the other.

9. The renovation drain system as claimed in claim 1, **characterized in that** the bushing (105) has an oval cross-section.

10. The renovation drain system as claimed in claim 1, **characterized in that** the liner member (100) comprises a half-pipe (612, 711) intended for attaching the liner member.

## Patentansprüche

1. Sanierungsablaufsystem (800) zum Reparieren eines Betonablaufs (201), umfassend
einen Sanierungsablauf (202),
**dadurch gekennzeichnet, dass** das Sanierungsablaufsystem (800) ferner Folgendes umfasst:
ein Auskleidungselement (100) einschließlich einer Auskleidung (101), die mit einer Imprägniermasse zubereitet werden soll, einer ersten Abzweigung (102) und einer zweiten Verzweigung (103), so dass die erste Abzweigung dazu bestimmt ist, sich in ein Einlassrohr des Betonabflusses (201) zu erstrecken, die zweite Abzweigung dazu bestimmt ist, sich in ein Auslassrohr des Betonabflusses zu erstrecken, und die Auskleidung (101) ein Auskleidungsloch (104) zwischen der ersten Abzweigung (102) und der zweiten Abzweigung (103) aufweist,
eine Buchse (105), die ihre Form behält, und wobei die Buchse dazu bestimmt ist, an dem Renovierungsablauf (202) innerhalb des Betonablaufs (201) befestigt zu werden, und
einen Kragen (106) zum Anbringen der Buchse an der Auskleidung (101) derart, dass die Buchse als dritte Abzweigung in dem Auskleidungselement (100) dient, und das Auskleidungsloch (104) sich an der Buchse (105) befindet und zusammen mit der Buchse einen Einlass (107) vom Sanierungsablauf (202) in das Auskleidungselement (100) bildet, und der Kragen (106) an der Auskleidung (101) um das Auskleidungsloch (104) herum haftet.

2. Sanierungsablaufsystem nach Anspruch 1, **dadurch gekennzeichnet, dass** der Kragen (106) mit der Buchse (105) einen gemeinsamen Gegenstand bildet.

3. Sanierungsablaufsystem nach Anspruch 1, **dadurch gekennzeichnet, dass** der Kragen (106) nach dem Verkleben aus dem Auskleidung (101) gebildet wird.

4. Sanierungsablaufsystem nach Anspruch 1, **dadurch gekennzeichnet, dass** der Kragen (106) in einem Herstellungsstadium des Auskleidungselements (100) ein von der Auskleidung (101) und der Buchse (105) getrenntes Objekt ist.

5. Sanierungsablaufsystem nach Anspruch 1, **dadurch gekennzeichnet, dass** das Sanierungsablaufsystem ein Teleskoprohr (231) umfasst.

6. Sanierungsablaufsystem nach Anspruch 1, **dadurch gekennzeichnet, dass** das Auskleidungselement (100) eine Reinigungskappe (303, 305) umfasst.

7. Sanierungsablaufsystem nach Anspruch 1, **dadurch gekennzeichnet, dass** das Sanierungsablaufsystem eine Vor-Auskleidung (401) und eine zweite Auskleidung (402) umfasst, und die Vor-Auskleidung und die zweite Auskleidung als Stützteile verwendet werden, um das Auskleidungselement (100) zu bilden.

8. Sanierungsablaufsystem nach Anspruch 1, **dadurch gekennzeichnet, dass** die Auskleidung (101) ein erstes Revers (501) und ein zweites Revers (502) umfasst, so dass die Auskleidung (101) eine Abzweigung bildet, indem das erste Revers und das zweite Revers teilweise aufeinander gelegt werden.

9. Sanierungsablaufsystem nach Anspruch 1, **dadurch gekennzeichnet, dass** die Buchse (105) einen ovalen Querschnitt aufweist.

10. Sanierungsablaufsystem nach Anspruch 1, **dadurch gekennzeichnet, dass** das Auskleidungselement (100) ein Halbrohr (612, 711) umfasst, das zum Anbringen des Auskleidungselements bestimmt ist.

## Revendications

1. Système de drain de rénovation (800) pour réparer un drain en béton (201), comprenant
un drain de rénovation (202),
**caractérisé en ce que** le système de drain de rénovation (800) comprend en outre
un élément de revêtement (100) comportant un revêtement (101) à préparer avec un composé d'imprégnation, une première branche (102) et une deuxième branche (103) de sorte que la première branche est destinée à s'étendre dans un tuyau d'entrée du drain en béton (201), la deuxième branche est destinée à s'étendre dans un tuyau de sortie du drain en béton, et le revêtement (101) présente un trou de revêtement (104) entre la première branche (102) et la deuxième branche (103),
un manchon (105) conservant sa forme, et le manchon est destiné à être fixé au drain de rénovation (202) à l'intérieur du drain en béton (201), et
un collier (106) pour fixer le manchon au revêtement (101) de sorte que le manchon fonctionne comme une troisième branche dans l'élément de revêtement (100) et que le trou de revêtement (104) est situé sur le manchon (105) et forme avec le manchon une entrée (107) du drain de rénovation (202) dans l'élément de revêtement (100), et le collier (106) adhère au revêtement (101) autour du trou de revêtement (104).

2. Système de drain de rénovation selon la revendication 1, **caractérisé en ce que** le collier (106) et le manchon (105) forment un même objet.

3. Système de drain de rénovation selon la revendication 1, **caractérisé en ce qu'**après adhésion, le collier (106) est formé du revêtement (101).

4. Système de drain de rénovation selon la revendication 1, **caractérisé en ce que** le collier (106) est, dans une étape de fabrication de l'élément de revêtement (100), un objet séparé du revêtement (101) et du manchon (105).

5. Système de drain de rénovation selon la revendication 1, **caractérisé en ce que** le système de drain de rénovation comprend un tuyau télescopique (231).

6. Système de drain de rénovation selon la revendication 1, **caractérisé en ce que** l'élément de revêtement (100) comprend un capuchon de nettoyage (303, 305) .

7. Système de drain de rénovation selon la revendication 1, **caractérisé en ce que** le système de drain de rénovation comprend un pré-revêtement (401) et un deuxième revêtement (402), et le pré-revêtement et le deuxième revêtement sont utilisés comme pièces de support pour former l'élément de revêtement (100).

8. Système de drain de rénovation selon la revendication 1, **caractérisé en ce que** le revêtement (101) comprend un premier revers (501) et un deuxième revers (502) de sorte que le revêtement (101) forme une branche en plaçant partiellement le premier revers et le deuxième revers l'un sur l'autre.

9. Système de drain de rénovation selon la revendication 1, **caractérisé en ce que** le manchon (105) a une section transversale ovale.

10. Système de drain de rénovation selon la revendication 1, **caractérisé en ce que** l'élément de revêtement (100) comprend un demi-tuyau (612, 711) destiné à la fixation de l'élément de revêtement.
